# EUROPÄISCHE PATENTANMELDUNG

(11) **EP 1 465 325 A1**
(43) Veröffentlichungstag der Anmeldung: **06.10.2004**
(21) Anmeldenummer: 03007699.6
(22) Anmeldetag: 03.04.2003
(51) Int. Cl.: H02K 7/12

(54) **Elektrischer Stellantrieb**

(71) Anmelder: SIEMENS AKTIENGESELLSCHAFT, 80333 München (DE)
(72) Erfinder: Maschke, Norbert, 01307 Dresden (DE); Protz, Armin, 01237 Dresden (DE); Rieger, Thomas, 93057 Regensburg (DE); Schiller, Hartmuth, 01237 Dresden (DE)

(57) **Zusammenfassung**

Ein elektrischer Stellantrieb mit einem Elektromotor (2) mit einer Motorwelle (8), mit einem über die Motorwelle (8) antreibbaren Stellelement (5), mit einer zwischen den Elektromotor (2) und das Stellelement (5) geschalteten Kupplung (4), und mit einem am Elektromotor (2) angeordneten Klappanker (10), welcher eine am Elektromotor (2) anliegende Position sowie eine vom Elektromotor (2) abgehobene Position einnehmen kann, wobei eine Feder (9,23) den Klappanker (10) mit einer Kraft in Richtung zur abgehobenen Position beaufschlagt und die Kupplung (4) mittels des Klappankers (10) betätigbar ist, weist einen mit dem Klappanker (10) in dessen am Elektromotor (2) anliegender Position zusammenwirkenden, relativ zum Klappanker (10) beweglichen Arretierhebel (6,12) auf.

## Beschreibung

Die Erfindung betrifft einen elektrischen Stellantrieb mit einem Elektromotor, über dessen Motorwelle ein Stellelement antreibbar ist, wobei zwischen den Motor und das Stellelement eine Kupplung geschaltet ist, die mit Hilfe eines am Motor angeordneten Klappankers betätigbar ist. Ein derartiger Stellantrieb ist beispielsweise aus der DE 2 161 011 A bekannt.

Der aus der DE 2 161 011 A bekannte Stellantrieb dient als Gasventilantrieb und ist mit einem Asynchronmotor ausgerüstet. Als Kupplung ist eine Schlingfederkupplung vorgesehen, welche einerseits in ein drehbar auf einer Welle angeordnetes Zahnrad und andererseits in eine ebenfalls auf der Welle angeordnete Haltescheibe eingehängt ist. Die Kupplung wird betätigt, indem die Haltescheibe relativ zum Zahnrad auf der Welle verdreht und damit die Schlingfeder auf der Welle festgezogen wird. Bei festgezogener Schlingfeder dreht sich die Haltescheibe unter Überwindung der Reibkraft einer Tellerfeder, welche auf der Welle zwischen der Haltescheibe und einem Rastrad angeordnet ist. Das Rastrad wird dabei mittels eines am Motor angeordneten Kipphebels oder Klappankers, welcher durch die Magnetkraft des Motors angezogen wird, fixiert. Der bekannte Stellantrieb hat somit den Nachteil, dass bei laufendem Motor permanent die Bremswirkung eines Federelementes, nämlich der Tellerfeder, überwunden werden muss. Der Stellantrieb setzt daher die Verwendung eines entsprechend leistungsstarken Elektromotors voraus. Für einen Stellantrieb mit relativ geringer Leistung, insbesondere einen mit einem Einphasen-Synchronmotor ausgerüsteten Fernantrieb für ein elektrisches Schaltgerät, ist die Konzeption des bekannten Stellantriebs daher nicht geeignet.

Der Erfindung liegt die Aufgabe zugrunde, einen elektrischen Stellantrieb, insbesondere für einen Fernantrieb für elektrische Schaltgeräte, mit einer zwischen einen Elektromotor und ein durch diesen betätigbares Stellelement geschalteten Kupplung anzugeben, welche, insbesondere bei geringer Motorleistung, in Abhängigkeit von einer vom Motor ausgeübten Magnetkraft besonders zuverlässig schaltbar ist.

Diese Aufgabe wird erfindungsgemäß gelöst durch einen elektrischen Stellantrieb mit den Merkmalen des Anspruchs 1. Der elektrische Stellantrieb weist einen Elektromotor mit einer Motorwelle sowie ein über diese antreibbares Stellelement auf, wobei zwischen den Motor und das Stellelement eine Kupplung geschaltet ist. Zur direkten oder indirekten Betätigung der Kupplung ist ein am Motor angeordneter Klappanker vorgesehen. Dieser Klappanker wird bei laufendem Motor von diesem magnetisch angezogen und ist durch eine Feder mit einer Kraft entgegen der Magnetkraft beaufschlagt. Zusätzlich zum Klappanker ist ein Arretierhebel vorgesehen, der relativ zum Klappanker beweglich ist und mit diesem in dessen am Elektromotor anliegender Position zusammenwirkt. Dabei kann entweder ein Feststellen des Klappankers durch den Arretierhebel oder eine Fixierung des Arretierhebels durch den Klappanker vorgesehen sein.

Nach einer ersten Alternative ist als Arretierhebel ein mit der Kupplung zusammenwirkender Schlaghebel vorgesehen, welcher eine eingeklinkte Position und eine ausgeklinkte Position einnehmen kann. In der eingeklinkten Position des Schlaghebels liegt der Klappanker am Elektromotor an und hält dabei den Schlaghebel fest. Analog der Federkraft-Beaufschlagung des Klappankers in Richtung zur vom Motor abgehobenen Position ist der Schlaghebel in Richtung zur ausgeklinkten Position durch Federkraft beaufschlagt. Das Abheben des Klappankers und damit das Ausklinken des Schlaghebels erfolgt, wenn der Klappanker nicht durch Magnetkraft oder, wie nachstehend noch näher erläutert, durch eine mechanische Blockierung am Elektromotor gehalten wird. Der Klappanker und der Schlaghebel können mittels getrennter Federelemente oder, in konstruktiv besonders einfacher Weise, mittels eines einzigen Federelementes mit Kraft beaufschlagt werden. In jedem Fall ist die Krafteinwirkung auf den Schlaghebel vorzugsweise größer als die Krafteinwirkung auf den Haltemagneten. Die auf den Schlaghebel einwirkende Feder ist somit als Kraft- oder Energiespeicherfeder nutzbar, welche einer besonders zuverlässigen Auslösung der Kupplung zwischen dem Motor und dem Stellelement mittels des Schlaghebels dient. Gleichzeitig genügt eine relativ geringe Magnetkraft, um den Klappanker am Elektromotor zu halten. Der Stellantrieb eignet sich damit insbesondere für einen Antrieb mit einem Einphasen-Synchronmotor mit permanentmagnetischem Läufer. Zur Erreichung einer relativ starken anziehenden Kraft zwischen dem Elektromotor und dem Klappanker ist dieser bevorzugt derart ausgebildet, dass beide Pole des Motors überdeckt sind. Um bei am Elektromotor anliegendem Klappanker nicht den Magnetfluss zwischen den Polen des Elektromotors in nennenswertem Umfang kurzzuschließen, weist der Klappanker vorzugsweise mindestens eine Zunge auf, welche die Pole des Elektromotors überdeckt, sich jedoch - in Axialrichtung der Motorwelle - nicht über die gesamte Breite des Klappankers erstreckt. Zur Reduzierung der unabhängig von der Motorbestromung auf die Klappankerzunge wirkende Auszugskraftkomponente, die der permanentmagnetische Motorläufer lageabhängig - von dessen Winkelposition - ausübt, kann diese Zunge auch vorteilhaft im Bereich zwischen den Motorpolen zur Vergrößerung des Abstandes zum Motorläufer radial nach außen ausgeformt bzw. abgewinkelt sein.

Nach einer zweiten Alternative ist als Arretierhebel ein Klappankerblockierhebel vorgesehen, durch welchen der Klappanker unabhängig von der magnetischen Wirkung des Elektromotors in anliegender Position blockierbar ist. Ein solcher Klappankerblockierhebel ist vorzugsweise zusätzlich zum Schlaghebel vorgesehen. Der Klappankerblockierhebel stellt sicher, dass eine Auslösung der Kupplung mittels des Klappankers oder mittels des mit dem Klappanker zusammenwirken Schlaghebels auch bei nicht durch Magnetkraft am Elektromotor angezogenen Klappanker, insbesondere bei ausgeschaltetem Elektromotor, ausgeschlossen werden kann. Der Klappankerblockierhebel ist vorzugsweise mittels des zur Betätigung des Stellelementes vorgesehenen Elektromotors betätigbar.

Der Vorteil der Erfindung liegt insbesondere darin, dass ein Elektromotor eines Stellantriebs bei Spannungsausfall durch Öffnen einer Kupplung schnell und zuverlässig von einem angetriebenen Stellelement getrennt wird, wobei die Auslösung der Kupplung durch Abfall eines ferromagnetischen Klappankers vom Elektromotor erfolgt und das Stellelement bei Spannungsausfall in eine definierte Stellung überführt wird.

Nachfolgend wird ein Ausführungsbeispiel der Erfindung anhand einer Zeichnung näher erläutert. Hierin zeigen jeweils in vereinfachter Darstellung:
- FIG 1: in einer schematischen Funktionsskizze einen Stellantrieb mit einem Elektromotor,
- FIG 2: in perspektivischer Darstellung den Elektromotor des Stellantriebs nach FIG 1 mit einem Klappanker in abgehobener Position,
- FIG 3: im Querschnitt die Anordnung nach FIG 2,
- FIG 4: in einer Querschnittsdarstellung analog FIG 3 den Elektromotor mit anliegendem Magnetanker,
- FIG 5: eine Draufsicht die Anordnung nach FIG 4,
- FIG 6: in perspektivischer Darstellung den Elektromotor mit einem Schlaghebel in ausgeklinkter Position,
- FIG 7: in perspektivischer Darstellung den Elektromotor mit Schlaghebel in eingeklinkter Position,
- FIG 8: in einer Querschnittsdarstellung den Klappanker in abgehobener Position und den Schlaghebel,
- FIG 9: in einer Querschnittsdarstellung den Klappanker in anliegender und den Schlaghebel in eingeklinkter Position,
- FIG 10: in perspektivischer Darstellung eine Anordnung nach FIG 9, und
- FIG 11: in einer Querschnittsdarstellung analog FIG 4 einen Elektromotor mit Magnetanker mit Ausbiegung der die Magnetpole überdeckenden Zunge.

Einander entsprechende oder gleich wirkende Teile sind in allen Figuren mit den gleichen Bezugszeichen versehen.

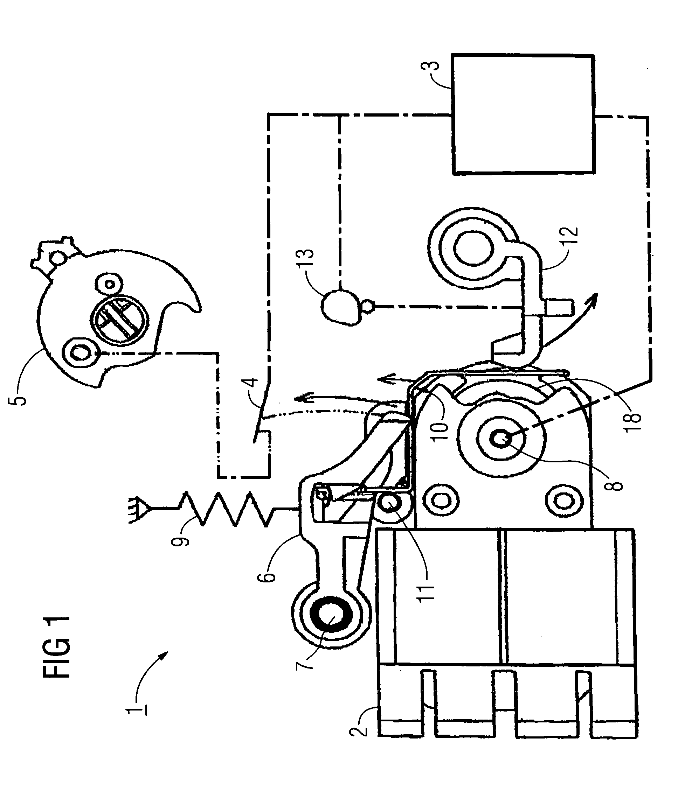

Die FIG 1 zeigt schematisch einen Stellantrieb 1 mit einem Elektromotor 2 und einem von diesem über ein Getriebe 3 und eine Kupplung 4 angetriebenen Stellelement 5. Der Stellantrieb 1 ist ein Fernantrieb für zur Hutschienenmontage vorgesehene Reiheneinbaugeräte. Das Stellelement 5 ist motorisch oder manuell betätigbar und zur Kopplung mit einem ähnlich geformten auch als Betätigungsknebel bezeichneten Stellorgan vorgesehen. Mittels der Kupplung 4 ist es möglich, dass das Stellelement 5 bei einem Energieausfall am Elektromotor 2 während des Schaltvorgangs in eine definierte Stellung überführt wird. Das Stellelement 5 und/oder ein mit diesem gekoppeltes weiteres Stellorgan ist hierfür in nicht dargestellter Weise mit Federkraft beaufschlagt. Ein Öffnen der durch ein Schaltersymbol angedeuteten, auch als Schaltkupplung oder Koppelmechanik bezeichneten Kupplung 4 bedeutet nicht notwendigerweise, dass deren Kraft übertragende Teile vollständig voneinander getrennt werden, sondern lediglich, dass die Beweglichkeit des Stellelementes 5 in der gewünschten Weise beeinflusst wird, insbesondere ein definiertes Schwenken des Stellelementes 5 in eine der Endpositionen ermöglicht wird.

Zur Betätigung der Kupplung 4 ist ein Schlaghebel 6 vorgesehen, dessen Hebelachse 7 parallel zur Motorwelle 8 des Elektromotors 2 angeordnet ist. Durch den Schlaghebel 6 ist eine hier symbolisch als Zugfeder angedeutete Kraftspeicherfeder 9 gespannt, die eine Schlagbewegung des Schlaghebels 6 auf die Kupplung 4 ermöglicht. Der Schlaghebel 6 ist mittels eines Klappankers 10 in eingeklinkter Position gehalten. Der Klappanker 10, welcher um eine ebenfalls parallel zur Motorwelle 8 angeordnete Klappachse 11 schwenkbar ist, liegt an dem als Einphasen-Synchronmotor ausgebildeten Elektromotor 2 an. Bei laufendem Elektromotor 2 wird der Klappanker 10 durch die Magnetkraft des Elektromotors 2 an diesem in anliegender Position gehalten. Ein Klappankerblockierhebel 12 als weiterer Arretier- oder Blockierhebel dient dazu, den Klappanker 10 unabhängig von der Magnetkraft in angeklappter Position zu halten. Der Klappankerblockierhebel 12 ist vom Elektromotor 2 über das Getriebe 3 mittels eines Steuernockens 13 betätigbar.

Vor dem Einschalten der Versorgungsspannung des Elektromotors 2 befindet sich der Klappankerblockierhebel 12 zunächst in der dargestellten, den Klappanker 10 in der anliegenden Position blockierenden Stellung. Wird der Elektromotor 2 eingeschaltet, so gibt der über den Steuernocken 13 angetriebene Klappankerblockierhebel 12 den Klappanker 10 frei. Dieser bleibt jedoch aufgrund der magnetischen Haltekraft des Elektromotors 2 an diesem angeklappt. Damit bleibt auch der Schlaghebel 6 in eingeklinkter Position und die Kupplung 4 geschlossen. Fällt bei Spannungsausfall oder unzulässigem Spannungsabfall während des Einschaltvorgangs, d.h. während der Betätigung des Stellelementes 5 durch den Elektromotor 2, die magnetische Haltekraft zwischen dem Klappanker 10 und dem auslaufenden Elektromotor 2 unter die Haltegrenze ab, so öffnet der Klappanker 10 und gibt damit den Schlaghebel 6 frei, welcher die Kupplung 4 öffnet. Mit geöffneter Kupplung 4 schnappt dann das Stellelement 5 in eine definierte Aus-Stellung zurück. Liegt wieder Spannung am Elektromotor an, so vollendet der Fernantrieb 1 intern den Einschaltvorgang. Hierbei wird die Kraftspeicherfeder 9 des Schlaghebels 6 wieder gespannt. Der Schlaghebel 6 bringt dabei den Klappanker 10 in die anliegende Position und wird mit diesem verklingt. Zum Abschluss wir der Klappanker 10 vom Klappankerblockierhebel 12 blockiert. Das Stellelement 5 verbleibt dabei bei geöffneter Kupplung 4 in der Aus-Stellung. Ein erneuter Einschaltvorgang, d.h. eine Überführung des Stellelementes 5 in Ein-Stellung ist nach einem Resetbefehl möglich, der den Stellantrieb 1 intern ebenfalls in die Aus-Stellung bringt, wobei die Kupplung 4 wieder geschlossen wird.

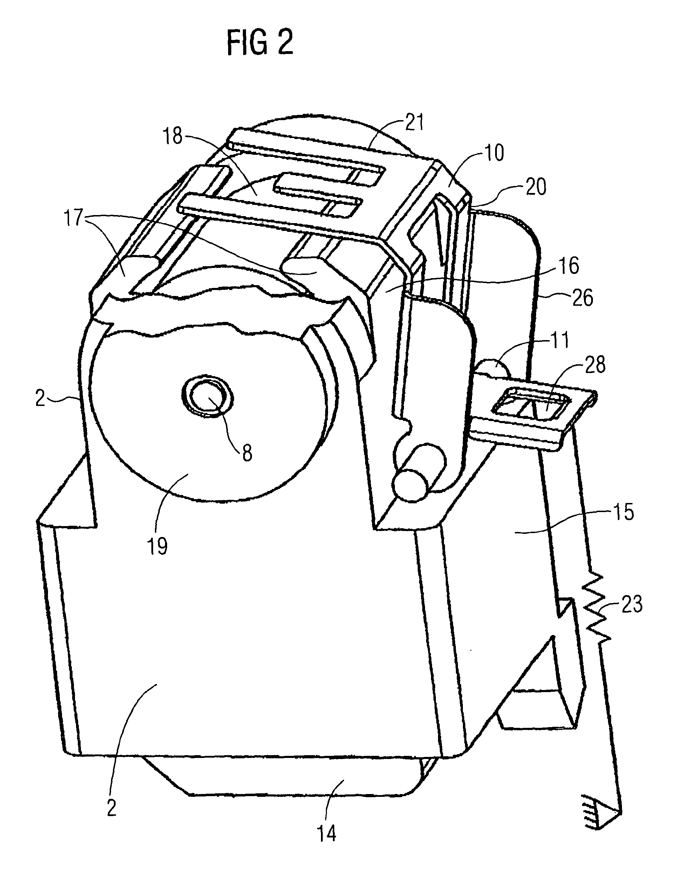

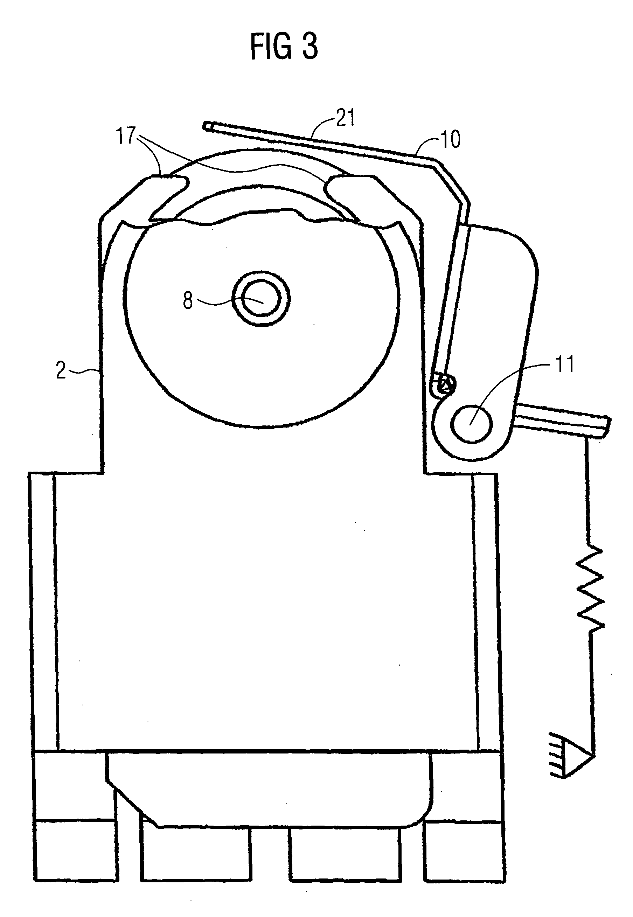

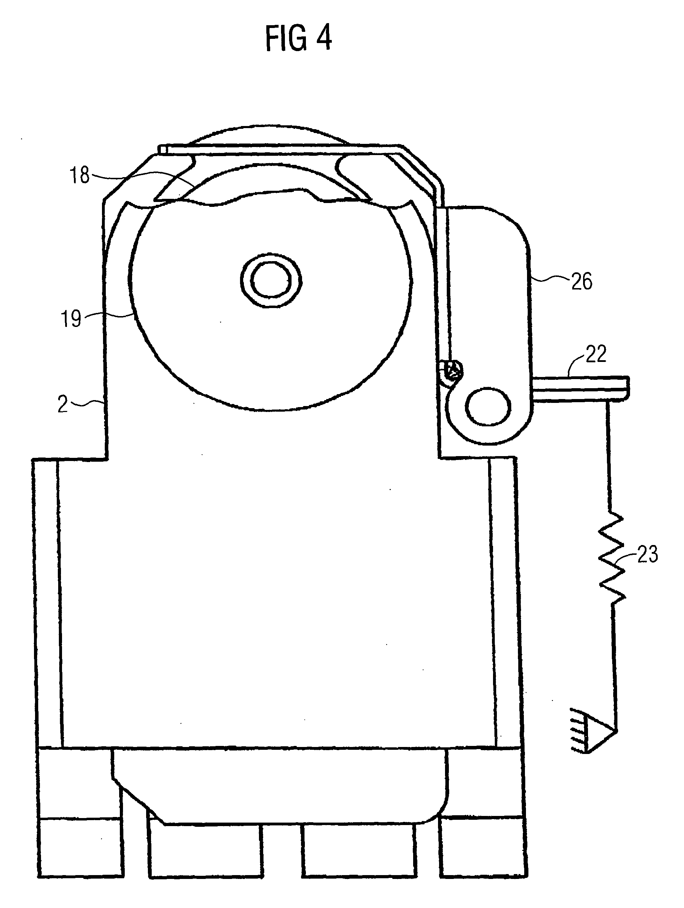

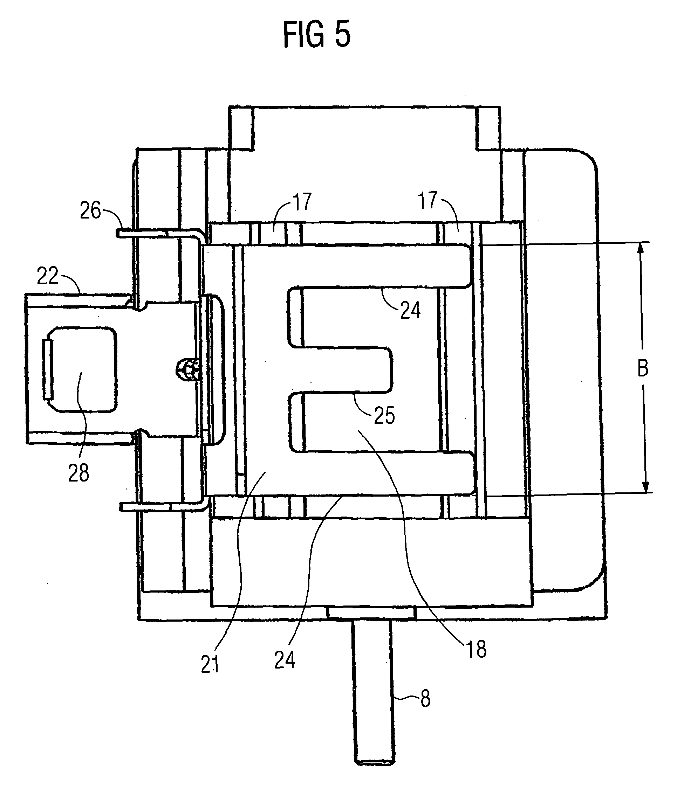

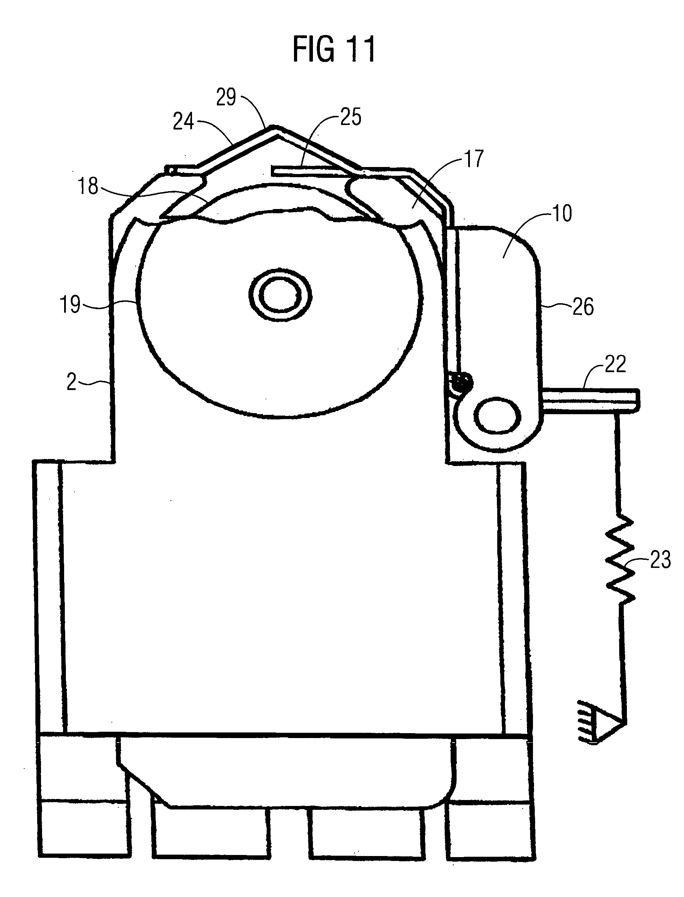

In FIG 2 ist der Einphasen-Synchronmotor 2 mit einem Stator 14, einer Motorwicklung 15, zwei ein Magnetjoch 16 bildenden Motorpolen 17, einem Rotor 18 und einem Lagerschild 19 näher dargestellt. Der Kipphebel oder Klappanker 10 weist einen seitlich am Magnetjoch 16 angeordneten Seitenschenkel 20, einen Polschenkel 21 sowie einen Rückstellschenkel 22 auf, welcher durch die Kraft einer Rückstellfeder 23 beaufschlagt ist. In den FIG 2 und 3 ist der Klappanker 10 in abgehobener Position und in den FIG 4 und 5 in anliegender Position dargestellt. Wie aus FIG 2 und 5 hervorgeht, weist der Polschenkel 21 mehrere Zungen 24,25 auf, wobei zwei äußere Zungen 24 die Magnetpole 17 überdecken, während eine innere Zunge 25 nur auf einem der Motorpole 17 aufliegt und zur Betätigung durch den Klappankerblockierhebel dient. Die beiden äußeren Zungen 24 erstrecken sich insgesamt über etwa ein Drittel der Breite B des Klappankers 10. Durch den an den Motorpolen 17 angeklappten Klappanker 10 (FIG 4 und 5) ist der Magnetfluss zwischen den Magnetpolen 17 teilweise kurzgeschlossen. Dieser partielle Kurzschluss ist jedoch aufgrund der nur teilweisen Abdeckung der Motorpole 17 durch die Zungen 24,25 und deren geringem Querschnitt derart gering ausgeprägt, dass der Betrieb des Elektromotors 2 praktisch nicht beeinflusst ist. Andererseits ist durch die Überdeckung der Motorpole 17 durch die äußeren Zungen 24 eine ausreichende magnetische Haltekraft gegeben. Im Übrigen wird die magnetische Haltekraft durch die Kraft zwischen dem Magnetjoch 16 und dem Seitenschenkel 20, welcher zusätzliche Verstärkungsflanken 26 aufweist, bereitgestellt. In FIG 11 ist eine Ausführungsvariante des Klappankers 10 dargestellt, bei der die die Magnetpole 17 überdeckenden Zungen 24 in Form einer Ausbiegung 29 abgewinkelt sind.

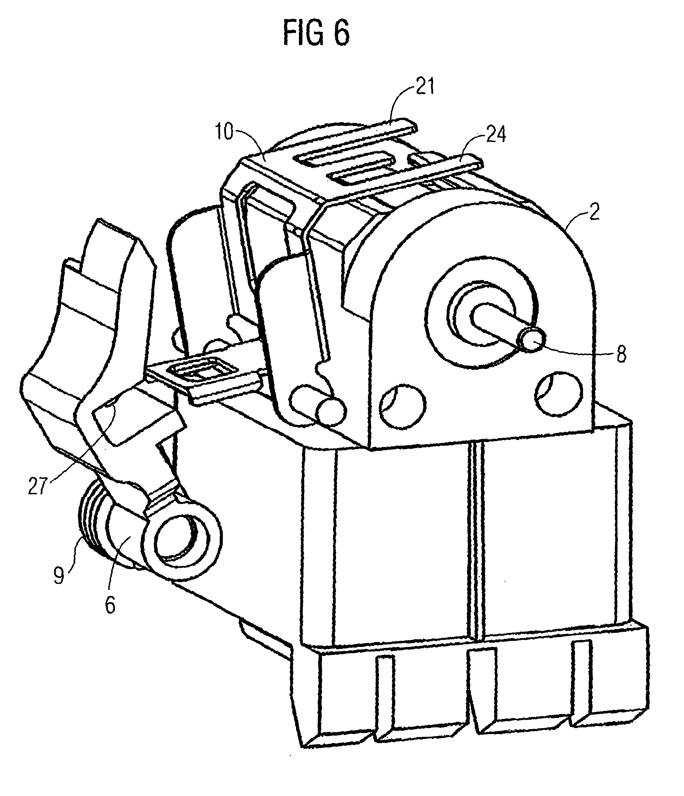

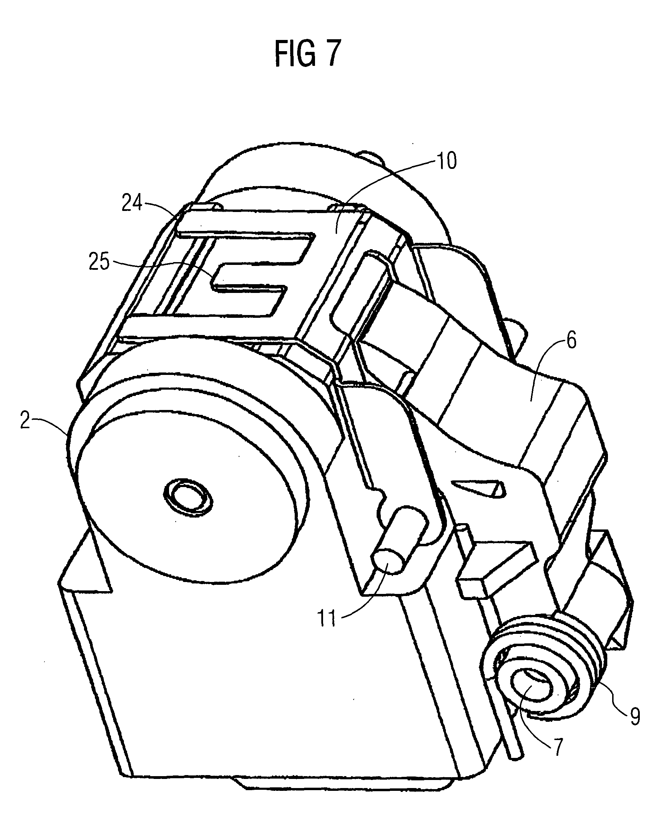

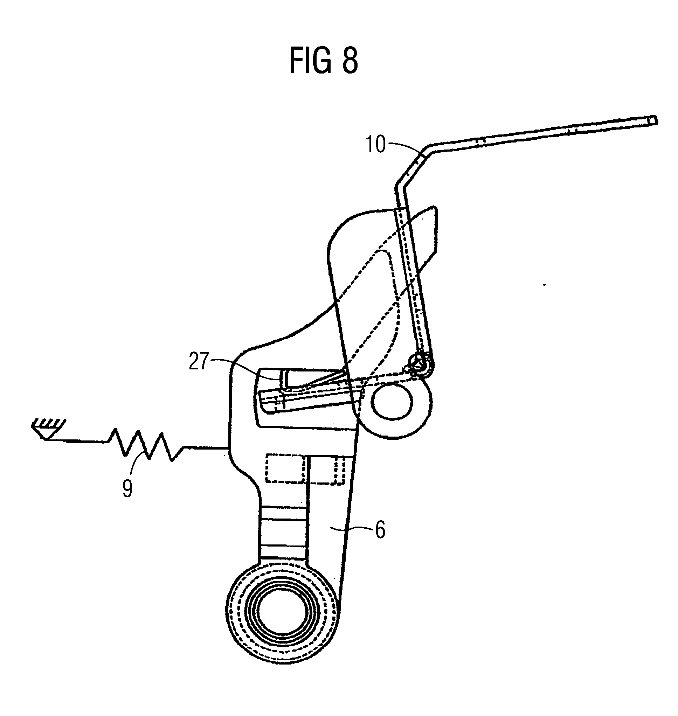

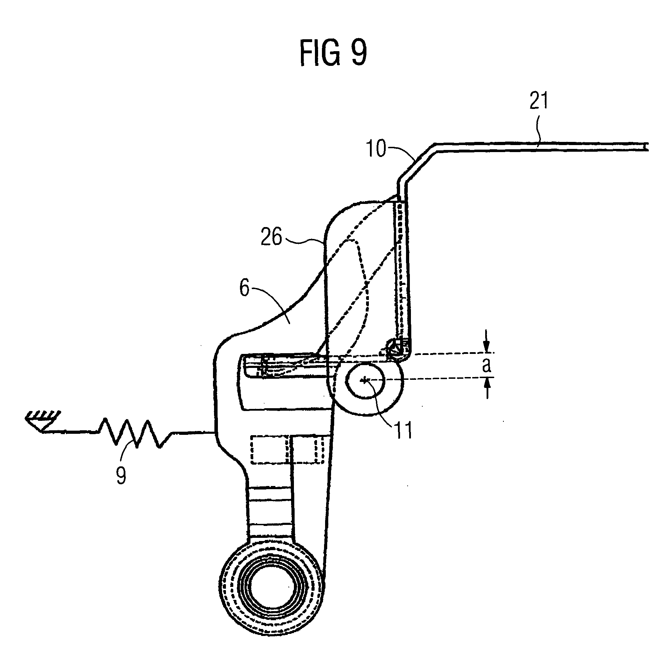

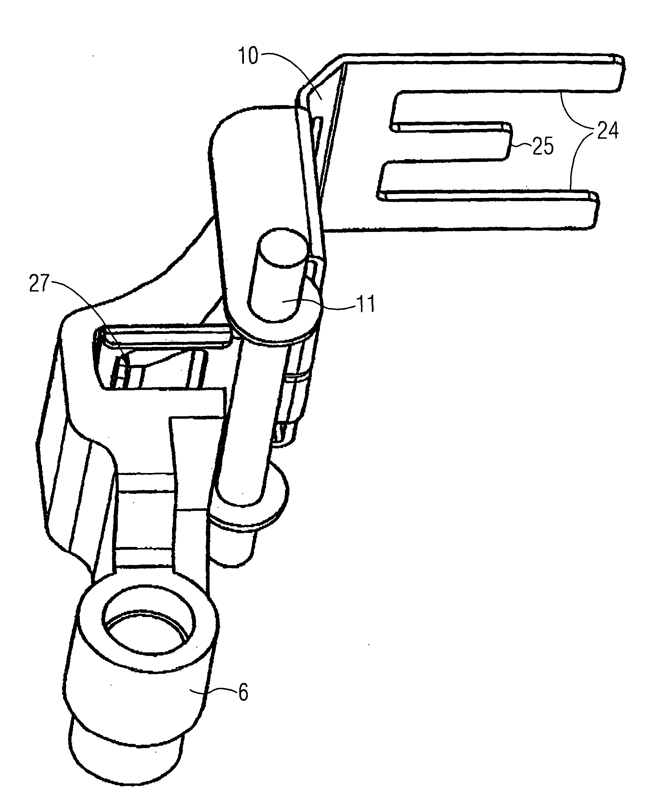

Die Zusammenwirkung des Klappankers 10 mit dem Schlaghebel 6 wird nachfolgend anhand der FIG 6 bis 10 näher erläutert. Als Kraftspeicherfeder 9 ist, wie aus den perspektivischen Darstellungen nach FIG 6 und 7 ersichtlich ist, eine Drehfeder vorgesehen. Wird der Schlaghebel 6 entgegen der Kraft der Feder 9 von der ausgeklinkten Position (FIG 6) in die eingeklinkte Position (FIG 7) gebracht, so rastet eine Rastnase 27 des Schlaghebels 6 in einer Öffnung 28 im Rückstellschenkel 22 des Klappankers 10 ein. Die Kraftspeicherfeder 9, in den FIG 8 und 9 lediglich symbolisch dargestellt, übt dabei ein Drehmoment auch auf den Klappanker 10 aus, welches jedoch aufgrund eines gering dimensionierten effektiven Hebelarms a, welcher durch den Abstand zwischen dem Rückstellschenkel 22 und der Klappachse 11 gegeben ist, um ein Mehrfaches geringer ist als das auf den Schlaghebel 6 einwirkende Drehmoment. Somit genügt eine relativ geringe magnetische Haltekraft am Seitenschenkel 20 und Polschenkel 21, um den Klappanker 10 entgegen einer starken Rückstellkraft der Kraftspeicherfeder 9 in anliegender Position zu halten. Die mit Hilfe des Klappankers 10 und des Schlaghebels 6 realisierte Spannungsüberwachung eignet sich daher besonders für einen Elektromotor 2 geringer Leistung, insbesondere in einem Fernantrieb für Schaltgeräte. Dabei kann ein handelsüblicher Synchronmotor unverändert verwendet werden.

## Patentansprüche

1. Elektrischer Stellantrieb mit einem Elektromotor (2) mit einer Motorwelle (8), mit einem über die Motorwelle (8) antreibbaren Stellelement (5), mit einer zwischen den Elektromotor (2) und das Stellelement (5) geschalteten Kupplung (4), und mit einem am Elektromotor (2) angeordneten Klappanker (10), welcher eine am Elektromotor (2) anliegende Position sowie eine vom Elektromotor (2) abgehobene Position einnehmen kann, wobei eine Feder (9,23) den Klappanker (10) mit einer Kraft in Richtung zur abgehobenen Position beaufschlagt und die Kupplung (4) mittels des Klappankers (10) betätigbar ist, **gekennzeichnet durch** einen mit dem Klappanker (10) in dessen am Elektromotor (2) anliegender Position zusammenwirkenden, relativ zum Klappanker (10) beweglichen Arretierhebel (6,12).

2. Stellantrieb nach Anspruch 1,
**dadurch gekennzeichnet, dass** als erster Arretierhebel ein mit der Kupplung zusammenwirkender Schlaghebel (6) vorgesehen ist, welcher eine eingeklinkte Position und eine ausgeklinkte Position einnehmen kann, wobei der Schlaghebel (6) in der eingeklinkten Position mittels des am Elektromotor (2) anliegenden Klappankers (10) blockierbar ist.

3. Stellantrieb nach Anspruch 1 oder 2,
**dadurch gekennzeichnet, dass** als zweiter Arretierhebel ein Klappankerblockierhebel (12) vorgesehen ist, durch welchen der Klappanker (10) unabhängig von der magnetischen Wirkung des Elektromotors (2) in anliegender Position blockierbar ist.

4. Stellantrieb nach Anspruch 2 oder 3,
**gekennzeichnet durch** eine Kraftspeicherfeder (9), die in eingeklinkter Position des Schlaghebels (6) **durch** diesen gespannt ist.

5. Stellantrieb nach Anspruch 4,
**dadurch gekennzeichnet, dass** mittels der Kraftspeicherfeder (9) der Klappanker (10) mit einer Federkraft beaufschlagt wird, welche entgegen der vom Elektromotor (2) auf den Klappanker (10) ausgeübten Magnetkraft wirkt.

6. Stellantrieb nach Anspruch 5,
**dadurch gekennzeichnet, dass** die Kraftwirkung von der Kraftspeicherfeder (9) auf den Schlaghebel (6) größer ist als auf den Klappanker (10).

7. Stellantrieb nach einem der Ansprüche 1 bis 6,
**dadurch gekennzeichnet, dass** der Elektromotor (2) ein Einphasen-Synchronmotor mit zwei Motorpolen (17) ist.

8. Stellantrieb nach Anspruch 7,
**dadurch gekennzeichnet, dass** der Klappanker (10) in anliegender Position den Luftspalt zwischen den Motorpolen (17) des Elektromotors (2) zumindest teilweise überdeckt.

9. Stellantrieb nach Anspruch 8,
**dadurch gekennzeichnet, dass** der Klappanker (10) in anliegender Position beide Motorpole (17) des Elektromotors (2) überdeckt.

10. Stellantrieb nach Anspruch 8 oder 9,
**dadurch gekennzeichnet, dass** der Klappanker (10) eine in anliegender Position beide Motorpole (17) des Elektromotors (2) überdeckende Zunge (24) aufweist, welche sich nicht über die gesamte Breite (B) des Klappankers (10) erstreckt.

11. Stellantrieb nach Anspruch 10,
**dadurch gekennzeichnet, dass** die Zunge (24) im Bereich eines Rotors (18) zwischen den Motorpolen (17) eine Ausbiegung (29) aufweist.
